# EUROPEAN PATENT APPLICATION

(11) **EP 4 737 515 A1**
(43) Date of publication of application: **06.05.2026**
(21) Application number: 23943790.8
(22) Date of filing: 07.12.2023
(51) Int. Cl.: C08L 65/00, B60C 1/00, C08G 61/08, C08K 3/04, C08L 9/00

(54) **RUBBER COMPOSITION FOR TIRES, AND TIRE**

(30) Priority: 30.06.2023 JP 2023108692
(71) Applicant: BRIDGESTONE CORPORATION, Chuo-ku Tokyo 104-8340 (JP)
(72) Inventor: FUKASAWA Rira, Tokyo 104-8340 (JP); TARUTANI Yasunori, Tokyo 104-8340 (JP); NISHIMURA Syunsuke, Tokyo 104-8340 (JP)
(74) Representative: Marks & Clerk LLP
(86) International application number: PCT/JP2023/043873
(87) International publication number: WO 2025/004404

(57) **Abstract**

The object is to provide a rubber composition for a tire capable of achieving a good balance between processability and both high fuel efficiency and wear resistance when adopted in a tire, and the solution is a rubber composition for a tire containing a rubber component and carbon black having a cetyltrimethylammonium bromide (CTAB) adsorption specific surface area of 50 m²/g to 125 m²/g, wherein the rubber component includes a copolymer of cyclopentene and a norbornene compound represented by the following general formula (1): 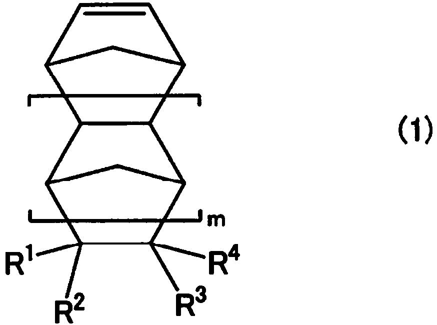 (in the formula, R¹ to R⁴ each independently represent a hydrogen atom, a hydrocarbon group having 1 to 20 carbon atoms, or a substituent containing a halogen atom, a silicon atom, an oxygen atom, or a nitrogen atom, R² and R³ may be bonded to each other to form a ring, and m is an integer of 0 to 2) and butadiene rubber.

## Description

### TECHNICAL FIELD

The present disclosure relates to a rubber composition for a tire and a tire.

### BACKGROUND

In connection with the recent global movement toward carbon dioxide emission regulations due to increasing concern over environmental issues, there is a growing demand for improved fuel efficiency in automobiles. To meet such demands, tire performance is also required to be improved in terms of high fuel efficiency (that is, reduction of rolling resistance).

In addition, from the viewpoint of tire economy, in the development of rubber compositions for tires, it is also required to improve wear resistance in addition to high fuel efficiency.

However, in general, high fuel efficiency and wear resistance are in a trade-off relationship, and it is difficult to achieve both. For example, a method of increasing the amount of filler blended to improve wear resistance is known, but increasing the amount of filler blended leads to deterioration in the dispersion state of the filler, resulting in a problem of deteriorated high fuel efficiency, and furthermore, causes a problem in which the unvulcanized viscosity of the rubber composition increases, thereby deteriorating processability. Thus, in general, it is difficult to achieve a good balance among high fuel efficiency, wear resistance, and processability.

In response, PTL 1 and PTL 2 below disclose rubber compositions for passenger vehicle tires and rubber compositions for heavy-duty truck and bus tires, which contain specific long-chain branched cyclopentene ring-opening rubber (LCB-CPR), and these rubber compositions are said to be effective in reducing rolling resistance of tires, improving wet skid resistance, and improving wear resistance.

### CITATION LIST

### Patent Literature

PTL 1: WO 2021/178233 A1
PTL 2: WO 2021/178235 A1

### SUMMARY

### (Technical Problem)

However, as a result of investigations by the present inventors, it was found that even with the techniques described in PTL 1 and PTL 2 above, it is difficult to achieve a good balance between the processability of the rubber composition and both the high fuel efficiency and wear resistance of a tire to which the rubber composition is applied, and there remains room for improvement.

Accordingly, the present disclosure has as its object to solve the above problems of the prior art and to provide a rubber composition for a tire capable of achieving a good balance between processability and both high fuel efficiency and wear resistance when applied to a tire.

Further, the present disclosure has as a further object to provide a tire in which high fuel efficiency, wear resistance, and productivity are well balanced.

### (Solution to Problem)

The essential configuration of the rubber composition for a tire and the tire of the present disclosure for solving the above problems is as follows.
[1] A rubber composition for a tire comprising a rubber component and carbon black having a cetyltrimethylammonium bromide (CTAB) adsorption specific surface area of not less than 50 m²/g and not more than 125 m²/g, wherein
   the rubber component includes:
   a copolymer of cyclopentene and a norbornene compound represented by general formula (1), shown below: 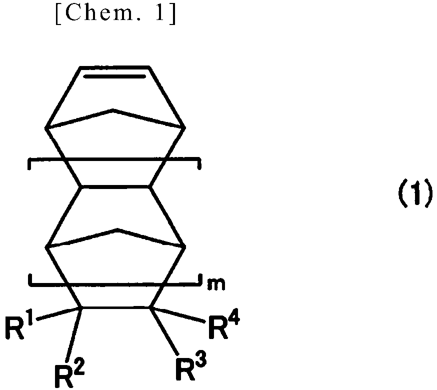 where, in general formula (1), R¹ to R⁴ each independently represent a hydrogen atom, a hydrocarbon group having 1 to 20 carbon atoms, or a substituent containing a halogen atom, a silicon atom, an oxygen atom, or a nitrogen atom, R² and R³ may be bonded to each other to form a ring, and m is an integer of 0 to 2; and
   butadiene rubber.
[2] The rubber composition for a tire according to [1], wherein the norbornene compound represented by general formula (1) is 2-norbornene and/or dicyclopentadiene.
[3] The rubber composition for a tire according to [1] or [2], wherein the content of the copolymer of cyclopentene and the norbornene compound is 20 parts by mass to 90 parts by mass per 100 parts by mass of the rubber component.
[4] The rubber composition for a tire according to any one of [1] to [3], wherein the copolymer of cyclopentene and the norbornene compound has a weight-average molecular weight (Mw) of 200,000 to 1,000,000.
[5] The rubber composition for a tire according to any one of [1] to [4], wherein the copolymer of cyclopentene and the norbornene compound has a content ratio of structural units derived from cyclopentene of 20% by mass to 75% by mass.
[6] The rubber composition for a tire according to any one of [2] to [5], wherein the copolymer of cyclopentene and the norbornene compound has a content ratio of structural units derived from 2-norbornene of 10% by mass to 60% by mass.
[7] The rubber composition for a tire according to any one of [2] to [6], wherein the copolymer of cyclopentene and the norbornene compound has a content ratio of structural units derived from dicyclopentadiene of 10% by mass to 60% by mass.
[8] The rubber composition for a tire according to any one of [1] to [7], wherein the content of the carbon black is 5 parts by mass to 80 parts by mass per 100 parts by mass of the rubber component.
[9] A tire comprising the rubber composition for a tire according to any one of [1] to [8].

### (Advantageous Effect)

According to the present disclosure, it is possible to provide a rubber composition for a tire capable of achieving a good balance between processability and both high fuel efficiency and wear resistance when applied to a tire.

Further, according to the present disclosure, it is possible to provide a tire in which high fuel efficiency, wear resistance, and productivity are well balanced.

### DETAILED DESCRIPTION

Hereinafter, the rubber composition for a tire and the tire of the present disclosure will be exemplified and described in detail based on embodiments thereof.

### <Definitions>

The compounds described in the present specification may be partially or entirely derived from fossil resources, may be derived from biological resources such as plant resources, or may be derived from recycled resources such as used tires. Further, they may be derived from a mixture of any two or more of fossil resources, biological resources, and recycled resources.

### <Rubber Composition for Tire>

The rubber composition for a tire of the present embodiment includes a rubber component and carbon black having a cetyltrimethylammonium bromide (CTAB) adsorption specific surface area of not less than 50 m²/g and not more than 125 m²/g. In the rubber composition for a tire of the present embodiment, the rubber component includes:
a copolymer of cyclopentene and a norbornene compound represented by the following general formula (1) (hereinafter also referred to simply as a "copolymer of cyclopentene and a norbornene compound" or a "copolymer"): 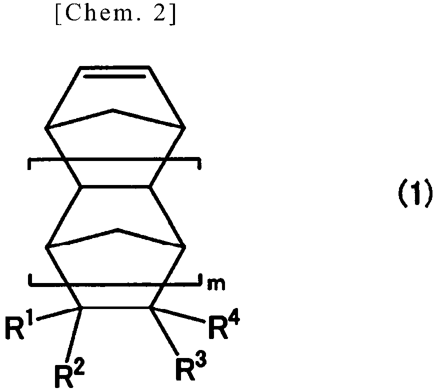 [in the formula, R¹ to R⁴ each independently represent a hydrogen atom, a hydrocarbon group having 1 to 20 carbon atoms, or a substituent containing a halogen atom, a silicon atom, an oxygen atom, or a nitrogen atom; R² and R³ may be bonded to each other to form a ring; and m is an integer of 0 to 2]; and
butadiene rubber.

In the rubber composition for a tire of the present embodiment, the copolymer of cyclopentene and the norbornene compound is characterized not only by having crosslinking points but also by entanglement between polymer chains. In addition, the carbon black contained in the rubber composition for a tire of the present embodiment, which has a CTAB adsorption specific surface area of not less than 50 m²/g and not more than 125 m²/g, is of a medium particle size, being neither fine nor coarse.

Generally, when carbon black is blended into a rubber component, a reinforcement layer composed of the carbon black and the rubber component is formed around the carbon black, and this reinforcement layer contributes to improving the reinforcing properties of the rubber composition, thereby enhancing wear resistance and the like. Here, in general, the smaller the particle size of the carbon black, the more developed the reinforcement layer becomes, resulting in improved wear resistance and the like; however, poor dispersion of the carbon black and an increase in unvulcanized viscosity tend to cause deterioration in high fuel efficiency and processability.

In contrast, in the rubber composition for a tire of the present embodiment, since carbon black of medium particle size having a CTAB adsorption specific surface area of not less than 50 m²/g and not more than 125 m²/g is used, deterioration in high fuel efficiency and processability can be suppressed.

Further, in the rubber composition for a tire of the present embodiment, by combining the copolymer of cyclopentene and the norbornene compound with the above-mentioned carbon black of medium particle size, the reinforcement layer formed around the carbon black of medium particle size is sufficiently present (ensured) due to the above-described entanglement between polymer chains, so that wear resistance can be sufficiently improved.

Furthermore, in the rubber composition for a tire of the present embodiment, the rubber component includes butadiene rubber (BR), and since the butadiene rubber has a low glass transition temperature (Tg), by combining it with the above-mentioned copolymer of cyclopentene and the norbornene compound, both high fuel efficiency and wear resistance of the rubber composition can be improved.

Accordingly, the rubber composition for a tire of the present embodiment can achieve a good balance between processability and both high fuel efficiency and wear resistance when applied to a tire.

### (Rubber Component)

The rubber composition for a tire of the present embodiment contains a rubber component, and this rubber component imparts rubber elasticity to the composition. The rubber component of the rubber composition for a tire of the present embodiment includes a copolymer of cyclopentene and the norbornene compound represented by the above general formula (1), and butadiene rubber, and may further include other rubbers.

### - Copolymer of Cyclopentene and Norbornene Compound -

The copolymer of cyclopentene and the norbornene compound includes structural units derived from cyclopentene and structural units derived from the norbornene compound represented by the above general formula (1). In a preferred embodiment, the copolymer of cyclopentene and the norbornene compound is a ring-opening copolymer, and in particular, a cyclopentene ring-opening copolymer.

In the above general formula (1), R¹ to R⁴ each independently represent a hydrogen atom, a hydrocarbon group having 1 to 20 carbon atoms, or a substituent containing a halogen atom, a silicon atom, an oxygen atom, or a nitrogen atom; R² and R³ may be bonded to each other to form a ring; and m is an integer of 0 to 2. Here, examples of the hydrocarbon group having 1 to 20 carbon atoms include: alkyl groups such as methyl group, ethyl group, n-propyl group, isopropyl group, n-butyl group, isobutyl group, sec-butyl group, tert-butyl group, neopentyl group, hexyl group, octyl group, and the like; alkenyl groups such as vinyl group, allyl group, 2-pentenyl group, 3-pentenyl group, 4-methyl-3-pentenyl group, and the like; aryl groups such as phenyl group, tolyl group, 2,6-dimethylphenyl group, 2,6-diisopropylphenyl group, naphthyl group, and the like; aralkyl groups such as benzyl group, phenethyl group, and the like.

Examples of the norbornene compound represented by the above general formula (1) include:
bicyclo[2.2.1]hept-2-ene compounds having no substituent or a hydrocarbon substituent, such as 2-norbornene, 5-methyl-2-norbornene, 5-ethyl-2-norbornene, 5-butyl-2-norbornene, 5-hexyl-2-norbornene, 5-decyl-2-norbornene, 5-cyclohexyl-2-norbornene, 5-cyclopentyl-2-norbornene, 5-ethylidene-2-norbornene, 5-vinyl-2-norbornene, 5-propenyl-2-norbornene, 5-cyclohexenyl-2-norbornene, 5-cyclopentenyl-2-norbornene, 5-phenyl-2-norbornene, tetracyclo[9.2.1.0^{2,10}.0^{3,8}]tetradeca-3,5,7,12-tetraene (also called "1,4-methano-1,4,4a,9a-tetrahydro-9H-fluorene"), tetracyclo[10.2.1.0^{2,1}.0^{4,9}]pentadeca-4,6,8,13-tetraene (also called "1,4-methano-1,4,4a,9,9a,10-hexahydroanthracene"), dicyclopentadiene, methyldicyclopentadiene, dihydrodicyclopentadiene (also called "tricyclo[5.2.1.0^{2,6}]deca-8-ene"), and the like;
tetracyclo[6.2.1.1^{3,6}.0^{2,7}]dodeca-4-ene compounds having no substituent or a hydrocarbon substituent, such as tetracyclo[6.2.1.1^{3,6}.0^{2,7}]dodeca-4-ene, 9-methyltetracyclo[6.2.1.1^{3,6}.0^{2,7}]dodeca-4-ene, 9-ethyltetracyclo[6.2.1.1^{3,6}.0^{2,7}]dodeca-4-ene, 9-cyclohexyltetracyclo[6.2.1.1^{3,6}.0^{2,7}]dodeca-4-ene, 9-cyclopentyltetracyclo[6.2.1.1^{3,6}.0^{2,7}]dodeca-4-ene, 9-methylenetetracyclo[6.2.1.1^{3,6}.0^{2,7}]dodeca-4-ene, 9-ethylidenetetracyclo[6.2.1.1^{3,6}.0^{2,7}]dodeca-4-ene, 9-vinyltetracyclo[6.2.1.1^{3,6}0.^{2,7}]dodeca-4-ene, 9-propenyltetracyclo[6.2.1.1^{3,6}.0^{2,7}]dodeca-4-ene, 9-cyclohexenyltetracyclo[6.2.1.1^{3,6}.0^{2,7}]dodeca-4-ene, 9-cyclopentenyltetracyclo[6.2.1.1^{3,6}.0^{2,7}]dodeca-4-ene, 9-phenyltetracyclo[6.2.1.1^{3,6}.0^{2,7}]dodeca-4-ene, and the like;
bicyclo[2.2.1]hept-2-ene compounds having an alkoxycarbonyl group, such as 5-norbornene-2-carboxylic acid methyl ester, 5-norbornene-2-carboxylic acid ethyl ester, 2-methyl-5-norbornene-2-carboxylic acid methyl ester, 2-methyl-5-norbornene-2-carboxylic acid ethyl ester, and the like;
tetracyclo[6.2.1.1^{3,6}.0^{2,7}]dodeca-4-ene compounds having an alkoxycarbonyl group, such as tetracyclo[6.2.1.1^{3,6}.0^{2,7}]dodeca-9-ene-4-carboxylic acid methyl ester, 4-methyltetracyclo[6.2.1.1^{3,6}.0^{2,7}]dodeca-9-ene-4-carboxylic acid methyl ester, and the like;
bicyclo[2.2.1]hept-2-ene compounds having a hydroxycarbonyl group or an acid anhydride group, such as 5-norbornene-2-carboxylic acid, 5-norbornene-2,3-dicarboxylic acid, 5-norbornene-2,3-dicarboxylic acid anhydride, and the like;
tetracyclo[6.2.1.1^{3,6}.0^{2,7}]dodeca-4-ene compounds having a hydroxycarbonyl group or an acid anhydride group, such as tetracyclo[6.2.1.1^{3,6}.0^{2,7}]dodeca-9-ene-4-carboxylic acid, tetracyclo[6.2.1.1^{3,6}.0^{2,7}]dodeca-9-ene-4,5-dicarboxylic acid, tetracyclo[6.2.1.1^{3,6}.0^{2,7}]dodeca-9-ene-4,5-dicarboxylic acid anhydride, and the like;
bicyclo[2.2.1]hept-2-ene compounds having a hydroxyl group, such as 5-hydroxy-2-norbornene, 5-hydroxymethyl-2-norbornene, 5,6-di(hydroxymethyl)-2-norbornene, 5,5-di(hydroxymethyl)-2-norbornene, 5-(2-hydroxyethoxycarbonyl)-2-norbornene, 5-methyl-5-(2-hydroxyethoxycarbonyl)-2-norbornene, and the like;
tetracyclo[6.2.1.1^{3,6}.0^{2,7}]dodeca-4-ene compounds having a hydroxyl group, such as tetracyclo[6.2.1.1^{3,6}.0^{2,7}]dodeca-9-ene-4-methanol, tetracyclo[6.2.1.1^{3,6}.0^{2,7}]dodeca-9-ene-4-ol, and the like;
bicyclo[2.2.1]hept-2-ene compounds having a hydrocarbonyl group, such as 5-norbornene-2-carbaldehyde, and the like;
tetracyclo[6.2.1.1^{3,6}.0^{2,7}]dodeca-4-ene compounds having a hydrocarbonyl group, such as tetracyclo[6.2.1.1^{3,6}.0^{2,7}]dodeca-9-ene-4-carbaldehyde, and the like;
bicyclo[2.2.1]hept-2-ene compounds having both an alkoxycarbonyl group and a hydroxycarbonyl group, such as 3-methoxycarbonyl-5-norbornene-2-carboxylic acid, and the like;
bicyclo[2.2.1]hept-2-ene compounds having a carbonyloxy group, such as 5-norbornene-2-yl acetate, 2-methyl-5-norbornene-2-yl acetate, 5-norbornene-2-yl acrylate, 5-norbornene-2-yl methacrylate, and the like;
tetracyclo[6.2.1.1^{3,6}.0^{2,7}]dodeca-4-ene compounds having a carbonyloxy group, such as tetracyclo[6.2.1.1^{3,6}.0^{2,7}]dodeca-4-enyl acetate, 9-tetracyclo[6.2.1.1^{3,6}.0^{2,7}]dodeca-4-enyl acrylate, 9-tetracyclo[6.2.1.1^{3,6}.0^{2,7}]dodeca-4-enyl methacrylate, and the like;
bicyclo[2.2.1]hept-2-ene compounds having a functional group containing a nitrogen atom, such as 5-norbornene-2-carbonitrile, 5-norbornene-2-carboxamide, 5-norbornene-2,3-dicarboximide, and the like;
tetracyclo[6.2.1.1^{3,6}.0^{2,7}]dodeca-4-ene compounds having a functional group containing a nitrogen atom, such as tetracyclo[6.2.1.1^{3,6}.0^{2,7}]dodeca-9-ene-4-carbonitrile, tetracyclo[6.2.1.1^{3,6}.0^{2,7}]dodeca-9-ene-4-carboxamide, tetracyclo[6.2.1.1^{3,6}.0^{2,7}]dodeca-9-ene-4,5-dicarboximide, and the like;
bicyclo[2.2.1]hept-2-ene compounds having a halogen atom, such as 5-chloro-2-norbornene, and the like;
tetracyclo[6.2.1.1^{3,6}.0^{2,7}]dodeca-4-ene compounds having a halogen atom, such as 9-chlorotetracyclo[6.2.1.1^{3,6}.0^{2,7}]dodeca-4-ene, and the like;
bicyclo[2.2.1]hept-2-ene compounds having a functional group containing a silicon atom, such as 5-trimethoxysilyl-2-norbornene, 5-triethoxysilyl-2-norbornene, and the like;
tetracyclo[6.2.1.1^{3,6}.0^{2,7}]dodeca-9-ene compounds having a functional group containing a silicon atom, such as 4-trimethoxysilyltetracyclo[6.2.1.1^{3,6}.0^{2,7}]dodeca-9-ene, 4-triethoxysilyltetracyclo[6.2.1.1^{3,6}.0^{2,7}]dodeca-9-ene, and the like.
The norbornene compound may be used alone or in combination of two or more kinds.

Among the norbornene compounds represented by the above general formula (1), those in which m in the above general formula (1) is 0 or 1 are preferred, and those in which m is 0 are more preferred. Further, in the above general formula (1), R¹ to R⁴ may be the same or different.

Among the norbornene compounds represented by the above general formula (1), from the viewpoint of high fuel efficiency and wear resistance of the rubber composition, it is preferred that R¹ to R⁴ in the above general formula (1) are hydrogen atoms, chain hydrocarbon groups having 1 to 20 carbon atoms, or substituents containing a halogen atom, a silicon atom, an oxygen atom, or a nitrogen atom. In this case, R¹ to R⁴ are not particularly limited so long as they are groups that are not bonded to each other and do not form a ring and may be the same or different, with hydrogen atoms or alkyl groups having 1 to 3 carbon atoms being preferred as R¹ to R⁴. Also, in this case, those in which m is 0 or 1 are preferred, and those in which m is 0 are more preferred. As norbornene compounds in which R¹ to R⁴ in the above general formula (1) are hydrogen atoms, chain hydrocarbon groups having 1 to 20 carbon atoms, or substituents containing a halogen atom, a silicon atom, an oxygen atom, or a nitrogen atom, bicyclo[2.2.1]hept-2-ene compounds having no substituent or a hydrocarbon substituent are preferred, and among them, 2-norbornene is particularly preferred.

Further, as norbornene compounds represented by the above general formula (1), compounds in which R² and R³ are bonded to each other to form a ring are also preferred. Here, specific examples of the ring structure formed by bonding of R² and R³ include cyclopentane ring, cyclopentene ring, cyclohexane ring, cyclohexene ring, benzene ring, and the like, which may form a polycyclic structure and may further have a substituent. Among these, cyclopentane ring, cyclopentene ring, and benzene ring are preferred, and in particular, compounds having a cyclopentene ring alone, or compounds having a polycyclic structure of a cyclopentane ring and a benzene ring are preferred. Note that R¹ and R⁴ other than R² and R³ forming the ring structure may be the same or different, and hydrogen atoms or alkyl groups having 1 to 3 carbon atoms are preferred. Also, in this case, those in which m is 0 are preferred. As norbornene compounds in which R² and R³ in the above general formula (1) are bonded to each other to form a ring, bicyclo[2.2.1]hept-2-ene compounds having no substituent or a hydrocarbon substituent are preferred, and among them, dicyclopentadiene is particularly preferred.

In the copolymer of cyclopentene and the norbornene compound, the content ratio of structural units derived from cyclopentene is preferably 20% by mass to 75% by mass, more preferably 25% by mass to 70% by mass, still more preferably 30% by mass to 65% by mass, and particularly preferably 35% by mass to 60% by mass, relative to all repeating structural units of the copolymer. By setting the content ratio of structural units derived from cyclopentene in the copolymer to the range of 20% by mass to 75% by mass, the high fuel efficiency and wear resistance of the rubber composition containing the copolymer can be further improved.

In the copolymer of cyclopentene and the norbornene compound, the content ratio of structural units derived from the norbornene compound represented by the above general formula (1) is preferably 10% by mass to 80% by mass, more preferably 20% by mass to 70% by mass, still more preferably 25% by mass to 65% by mass, and particularly preferably 40% by mass to 65% by mass, relative to all repeating structural units of the copolymer. By setting the content ratio of structural units derived from the norbornene compound represented by the general formula (1) in the copolymer to the range of 10% by mass to 80% by mass, the high fuel efficiency and wear resistance of the rubber composition containing the copolymer can be further improved.

In the copolymer of cyclopentene and the norbornene compound, the norbornene compound represented by the above general formula (1) is preferably 2-norbornene and/or dicyclopentadiene. Since 2-norbornene and dicyclopentadiene are readily available, a copolymer of cyclopentene and 2-norbornene and/or dicyclopentadiene is also readily available. Therefore, a rubber composition for a tire containing a copolymer of cyclopentene and 2-norbornene and/or dicyclopentadiene is advantageous in terms of cost.

When 2-norbornene is used as the norbornene compound represented by the above general formula (1), it is preferable that, in the copolymer of cyclopentene and the norbornene compound, the content ratio of structural units derived from 2-norbornene is 10% by mass to 60% by mass, and more preferably 20% by mass to 60% by mass, relative to all repeating structural units of the copolymer. By setting the content ratio of structural units derived from 2-norbornene in the copolymer to a range of 10% by mass to 60% by mass, it is possible to further improve the high fuel efficiency and wear resistance of the rubber composition containing the copolymer.

When dicyclopentadiene is used as the norbornene compound represented by the above general formula (1), it is preferable that, in the copolymer of cyclopentene and the norbornene compound, the content ratio of structural units derived from dicyclopentadiene is 10% by mass to 60% by mass, and more preferably 20% by mass to 45% by mass, relative to all repeating structural units of the copolymer. When the content ratio of structural units derived from dicyclopentadiene in the copolymer is 60% by mass or less, the processability of the rubber composition is further improved. Therefore, by setting the content ratio of structural units derived from dicyclopentadiene in the copolymer to a range of 10% by mass to 60% by mass, it is possible to further improve the high fuel efficiency, wear resistance, and processability of the rubber composition containing the copolymer.

In one embodiment, as the copolymer of cyclopentene and the norbornene compound, a terpolymer of cyclopentene (CP), 2-norbornene (NB), and dicyclopentadiene (DCPD) may be used. The terpolymer of cyclopentene, 2-norbornene, and dicyclopentadiene has a significant effect in improving the high fuel efficiency of the rubber composition.

The copolymer of cyclopentene and the norbornene compound may be a copolymer of cyclopentene and the norbornene compound represented by the above general formula (1), further copolymerized with other monomers that can be copolymerized therewith. Examples of such other monomers include: cyclic monoolefins such as cyclopropene, cyclobutene, methylcyclopentene, cyclohexene, methylcyclohexene, cycloheptene, and cyclooctene; cyclic diolefins such as cyclohexadiene, methylcyclohexadiene, cyclooctadiene, and methylcyclooctadiene; and polycyclic cycloolefins having an aromatic ring such as phenylcyclooctene, 5-phenyl-1,5-cyclooctadiene, and phenylcyclopentene. The content ratio of structural units derived from other monomers in the copolymer of cyclopentene and the norbornene compound is preferably 40% by mass or less, more preferably 30% by mass or less, relative to all repeating structural units of the copolymer, and it is particularly preferable that structural units derived from other monomers are substantially not contained.

The copolymer of cyclopentene and the norbornene compound preferably has a weight-average molecular weight (Mw) of 200,000 to 1,000,000, more preferably 200,000 to 800,000, still more preferably 200,000 to 700,000, and particularly preferably 200,000 to 600,000. A copolymer having a weight-average molecular weight (Mw) in the range of 200,000 to 1,000,000 is easy to produce and also has good processability (operability). Further, by setting the weight-average molecular weight (Mw) of the copolymer in the range of 200,000 to 1,000,000, it is possible to further improve the high fuel efficiency and wear resistance of the rubber composition containing the copolymer.

In addition, the copolymer of cyclopentene and the norbornene compound preferably has a ratio of weight-average molecular weight (Mw) to number-average molecular weight (Mn) (Mw/Mn, also referred to as "molecular weight distribution") of 1.0 to 5.0, more preferably 1.5 to 2.9, still more preferably 1.5 to 2.5, and particularly preferably 1.5 to 2.3.

Here, the weight-average molecular weight (Mw) and number-average molecular weight (Mn) of the copolymer are polystyrene-equivalent values measured by gel permeation chromatography (GPC).

The copolymer of cyclopentene and the norbornene compound preferably has a cis/trans ratio of 0/100 to 60/40, more preferably 5/95 to 55/45, still more preferably 10/90 to 50/50, and particularly preferably 15/85 to 39/61. The cis/trans ratio refers to the ratio (cis/trans) of the content of cis structure and trans structure of double bonds present in the repeating units constituting the copolymer of cyclopentene and the norbornene compound. By setting the cis/trans ratio of the copolymer within the above range, it is possible to further improve the high fuel efficiency and wear resistance of the rubber composition containing the copolymer.

The copolymer of cyclopentene and the norbornene compound preferably has a glass transition temperature (Tg) of -80°C to 10°C, more preferably -75°C to 0°C, and still more preferably -70°C to -10°C. By setting the glass transition temperature (Tg) of the copolymer within the above range, it is possible to further improve the high fuel efficiency and wear resistance of the rubber composition containing the copolymer. The glass transition temperature of the copolymer can be controlled, for example, by adjusting the type and amount of the norbornene compound used.

The copolymer of cyclopentene and the norbornene compound may have a modified group at the polymer chain end. By having such a terminal modified group, the affinity for silica or the like can be further enhanced, the dispersibility of silica or the like in the rubber composition can be improved, and as a result, the processability (operability), high fuel efficiency, and wear resistance of the rubber composition can be further improved. The modified group introduced at the polymer chain end of the copolymer is not particularly limited, but a modified group containing an atom selected from the group consisting of an atom of Group 15 of the periodic table, an atom of Group 16 of the periodic table, and a silicon atom is preferred. From the viewpoint of enhancing affinity for silica or the like, a modified group containing an atom selected from the group consisting of nitrogen atoms, oxygen atoms, phosphorus atoms, sulfur atoms, and silicon atoms is more preferred, and among these, a modified group containing an atom selected from the group consisting of nitrogen atoms, oxygen atoms, and silicon atoms is still more preferred.

Examples of modified groups containing a nitrogen atom include amino groups, pyridyl groups, imino groups, amide groups, nitro groups, urethane bonds, or hydrocarbon groups containing any of these groups. Examples of modified groups containing an oxygen atom include hydroxyl groups, carboxyl groups, ether groups, ester groups, carbonyl groups, aldehyde groups, epoxy groups, or hydrocarbon groups containing any of these groups. Examples of modified groups containing a silicon atom include alkylsilyl groups, oxysilyl groups, or hydrocarbon groups containing any of these groups. Examples of modified groups containing a phosphorus atom include phosphoric acid groups, phosphino groups, or hydrocarbon groups containing any of these groups. Examples of modified groups containing a sulfur atom include sulfonyl groups, thiol groups, thioether groups, or hydrocarbon groups containing any of these groups. The modified group may also be a modified group containing two or more of the above groups. Among these, from the viewpoint of further improving the processability (operability), high fuel efficiency, and wear resistance of the rubber composition, amino groups, pyridyl groups, imino groups, amide groups, hydroxyl groups, carboxyl groups, aldehyde groups, epoxy groups, oxysilyl groups, or hydrocarbon groups containing any of these groups are preferred, and from the viewpoint of affinity for silica or the like, oxysilyl groups are particularly preferred. Here, an oxysilyl group refers to a group having a silicon-oxygen bond.

Examples of the oxysilyl group include alkoxysilyl groups, aryloxysilyl groups, acyloxy groups, alkylsiloxysilyl groups, and arylsiloxysilyl groups. Further, examples include hydroxy silyl groups obtained by hydrolyzing an alkoxysilyl group, aryloxysilyl group, or acyloxy group. Among these, from the viewpoint of affinity for silica, alkoxysilyl groups are preferred. The alkoxysilyl group is a group in which one or more alkoxy groups are bonded to a silicon atom, and specific examples include trimethoxysilyl group, dimethoxymethylsilyl group, methoxydimethylsilyl group, methoxydichlorosilyl group, triethoxysilyl group, diethoxymethylsilyl group, ethoxydimethylsilyl group, dimethoxyethoxysilyl group, methoxydiethoxysilyl group, tripropoxysilyl group, and the like.

The introduction ratio of the modified group at the polymer chain end of the copolymer of cyclopentene and the norbornene compound is not particularly limited, but as a percentage value of the number of copolymer chain ends into which the modified group is introduced to the total number of copolymer chain ends, it is preferably 10% or more, more preferably 20% or more, still more preferably 30% or more, and particularly preferably 40% or more. The higher the introduction ratio of the terminal modified group, the higher the affinity for silica or the like, which is preferred. The method for measuring the introduction ratio of the modified group at the polymer chain end is not particularly limited, but as an example, when an oxysilyl group is introduced as the terminal modified group, it can be determined from the peak area ratio corresponding to the oxysilyl group obtained by ¹H-NMR spectral measurement and the number-average molecular weight (Mn) obtained by gel permeation chromatography (GPC).

The copolymer of cyclopentene and the norbornene compound preferably has a Mooney viscosity (ML₁₊₄, 100°C) of 20 to 150, more preferably 22 to 120, and particularly preferably 25 to 90.

The method for producing the copolymer of cyclopentene and the norbornene compound is not particularly limited, but, for example, a method in which cyclopentene and the norbornene compound represented by the above general formula (1) are copolymerized in the presence of a ring-opening polymerization catalyst can be mentioned.

The ring-opening polymerization catalyst is not particularly limited as long as it can ring-open copolymerize cyclopentene and the norbornene compound represented by the above general formula (1), but ruthenium carbene complexes and Group 6 transition metal compounds of the periodic table containing a halogen atom (hereinafter also referred to as "Group 6 transition metal compounds of the periodic table ") are preferred. These ring-opening polymerization catalysts may be used alone or in combination of two or more.

Examples of the ruthenium carbene complex include bis(tricyclohexylphosphine)benzylidene ruthenium dichloride, bis(triphenylphosphine)-3,3-diphenylpropenylidene ruthenium dichloride, bis(tricyclohexylphosphine)t-butylvinylidene ruthenium dichloride, dichloro-(3-phenyl-1H-inden-1-ylidene)bis(tricyclohexylphosphine)ruthenium, bis(1,3-diisopropylimidazolin-2-ylidene)benzylidene ruthenium dichloride, bis(1,3-dicyclohexylimidazolin-2-ylidene)benzylidene ruthenium dichloride, (1,3-dimesitylimidazolin-2-ylidene)(tricyclohexylphosphine)benzylidene ruthenium dichloride, (1,3-dimesitylimidazolidin-2-ylidene)(tricyclohexylphosphine)benzylidene ruthenium dichloride, bis(tricyclohexylphosphine)ethoxymethylidene ruthenium dichloride, (1,3-dimesitylimidazolidin-2-ylidene)(tricyclohexylphosphine)ethoxymethylidene ruthenium dichloride, and the like.

The Group 6 transition metal compound of the periodic table refers to a compound having a Group 6 transition metal atom of the periodic table (long-periodic table, the same applies hereinafter), specifically, a compound having a chromium atom, molybdenum atom, or tungsten atom, and a compound having a molybdenum atom or a tungsten atom is preferred, and in particular, from the viewpoint of high solubility in cyclopentene, a compound having a tungsten atom is more preferred. Specific examples of the Group 6 transition metal compound include molybdenum compounds such as molybdenum pentachloride, molybdenum oxotetrachloride, and molybdenum (phenylimido)tetrachloride; tungsten compounds such as tungsten hexachloride, tungsten oxotetrachloride, tungsten (phenylimido)tetrachloride, monocathecolate tungsten tetrachloride, bis(3,5-di-tert-butyl)catecholate tungsten dichloride, bis(2-chloroetherate)tetrachloride, and the like.

The amount of the ring-opening polymerization catalyst used is usually in the range of a molar ratio (ring-opening polymerization catalyst:monomer used for copolymerization) of 1:500 to 1:2,000,000, preferably 1:700 to 1:1,500,000, and more preferably 1:1,000 to 1:1,000,000. When the Group 6 transition metal compound of the periodic table is used, the amount of the Group 6 transition metal compound of the periodic table is preferably in the range of a molar ratio (Group 6 transition metal atom in the ring-opening polymerization catalyst:monomer used for ring-opening polymerization) of 1:100 to 1:200,000, more preferably 1:200 to 1:150,000, and still more preferably 1:500 to 1:100,000.

When the Group 6 transition metal compound of the periodic table is used as the ring-opening polymerization catalyst, it is preferable to use it in combination with an organic aluminum compound represented by the following general formula (2). The organic aluminum compound acts as a ring-opening polymerization catalyst together with the above-mentioned Group 6 transition metal compound of the periodic table.

(R⁵)₃₋ₓAl(OR⁶)ₓ ··· (2)

In the above general formula (2), R⁵ and R⁶ each independently represent a hydrocarbon group having 1 to 20 carbon atoms, and preferably a hydrocarbon group having 1 to 10 carbon atoms. Also, x is 0 < x < 3.

In the above general formula (2), examples of R⁵ and R⁶ include alkyl groups such as methyl group, ethyl group, isopropyl group, n-propyl group, isobutyl group, n-butyl group, t-butyl group, n-hexyl group, cyclohexyl group, n-octyl group, n-decyl group; aryl groups such as phenyl group, 4-methylphenyl group, 2,6-dimethylphenyl group, 2,6-diisopropylphenyl group, naphthyl group; and the like.

In the above general formula (2), x is 0 < x < 3. That is, in general formula (2), the composition ratios of R⁵ and OR⁶ can take any value within the respective ranges of 0 < 3-x < 3 and 0 < x < 3, but from the viewpoint of achieving high polymerization activity, x is preferably 0.5 < x < 1.5.

The organic aluminum compound represented by the above general formula (2) can be synthesized, for example, by reacting trialkyl aluminum with an alcohol as indicated by the following general formula (3).

(R⁵)₃Al + xR⁶OH → (R⁵)₃₋ₓAl(OR⁶)ₓ + (R⁶)ₓH ··· (3)

In addition, x in the above general formula (2) can be arbitrarily controlled by defining the reaction ratio of the corresponding trialkyl aluminum and alcohol as indicated in the above general formula (3).

The amount of the organic aluminum compound used varies depending on the type of organic aluminum compound used, but relative to the Group 6 transition metal atom constituting the Group 6 transition metal compound of the periodic table, it is preferably 0.1 to 100 molar equivalents, more preferably 0.2 to 50 molar equivalents, and still more preferably 0.5 to 20 molar equivalents. If the amount of the organic aluminum compound is too small, the polymerization activity may be insufficient, and if it is too large, side reactions tend to occur during ring-opening polymerization.

The polymerization reaction may be carried out in the absence of a solvent or in solution. When copolymerizing in solution, the solvent used is not particularly limited as long as it is inert in the polymerization reaction and can dissolve cyclopentene, the norbornene compound represented by the above general formula (1), the polymerization catalyst, and the like used for copolymerization, but it is preferable to use a hydrocarbon solvent or a halogenated solvent. Examples of the hydrocarbon solvent include aromatic hydrocarbons such as benzene, toluene, xylene, and ethylbenzene; aliphatic hydrocarbons such as hexane, n-heptane, and n-octane; alicyclic hydrocarbons such as cyclohexane, cyclopentane, and methylcyclohexane; and the like. Examples of the halogenated solvent include haloalkanes such as dichloromethane and chloroform; aromatic halogens such as chlorobenzene and dichlorobenzene; and the like. These solvents may be used alone or in combination of two or more.

When copolymerizing cyclopentene and the norbornene compound represented by the above general formula (1), an olefin compound or a diolefin compound may be added to the polymerization reaction system as a molecular weight regulator, as necessary, in order to adjust the molecular weight of the resulting copolymer.

As the olefin compound, any organic compound having an ethylenically unsaturated bond may be used without particular limitation, and examples include α-olefins such as 1-butene, 1-pentene, 1-hexene, and 1-octene; styrene compounds such as styrene and vinyltoluene; halogen-containing vinyl compounds such as allyl chloride; alkenyl alcohols such as allyl alcohol and 5-hexenol; silicon-containing vinyl compounds such as allyltrimethoxysilane, allyltriethoxysilane, allyltrichlorosilane, and styryltrimethoxysilane; disubstituted olefins such as 2-butene and 3-hexene; and the like. As the diolefin compound, examples include non-conjugated diolefins such as 1,4-pentadiene, 1,4-hexadiene, 1,5-hexadiene, 1,6-heptadiene, 2-methyl-1,4-pentadiene, and 2,5-dimethyl-1,5-hexadiene.

The amount of the olefin compound and diolefin compound used as the molecular weight regulator may be appropriately selected according to the molecular weight of the copolymer to be produced, but is usually in the range of a molar ratio of 1/100 to 1/100,000, preferably 1/200 to 1/50,000, more preferably 1/500 to 1/10,000, relative to the monomer used for copolymerization.

Further, when the copolymer of cyclopentene and the norbornene compound is to have a modified group at the polymer chain end, it is preferable to use, as the molecular weight regulator, an olefinically unsaturated hydrocarbon compound containing a modified group, instead of the above-mentioned olefin compound or diolefin compound. By using an olefinically unsaturated hydrocarbon compound containing a modified group, the modified group can be suitably introduced at the polymer chain end of the copolymer obtained by copolymerization. The olefinically unsaturated hydrocarbon compound containing a modified group is not particularly limited as long as it has a modified group and has one olefinic carbon-carbon double bond with metathesis reactivity. For example, when it is desired to introduce an oxysilyl group at the polymer chain end of the copolymer, an oxysilyl group-containing olefinically unsaturated hydrocarbon may be present in the polymerization reaction system.

Examples of the oxysilyl group-containing olefinically unsaturated hydrocarbons include, as compounds for introducing a modified group at only one end (single end) of the polymer chain of the copolymer, alkoxysilane compounds such as vinyltrimethoxysilane, vinyltriethoxysilane, allyltrimethoxysilane, allylmethoxydimethylsilane, allyltriethoxysilane, allylethoxydimethylsilane, styryltrimethoxysilane, styryltriethoxysilane, styrylethyltriethoxysilane, allyltriethoxysilylmethyl ether, and allyltriethoxysilylmethylethylamine; aryloxysilane compounds such as vinyltriphenoxysilane, allyltriphenoxysilane, and allylphenoxydimethylsilane; acyloxysilane compounds such as vinyltriacetoxysilane, allyltriacetoxysilane, allyldiacetoxymethylsilane, and allylacetoxydimethylsilane; alkylsiloxysilane compounds such as allyltris(trimethylsiloxy)silane; aryloxysilane compounds such as allyltris(triphenylsiloxy)silane; polysiloxane compounds such as 1-allylheptamethyltrisiloxane, 1-allylnonamethyltetrasiloxane, 1-allylnonamethylcyclopentasiloxane, and 1-allylundecamethylcyclohexasiloxane; and the like. Further, as compounds for introducing a modified group at both ends (both ends) of the polymer chain of the copolymer, examples include alkoxysilane compounds such as bis(trimethoxysilyl)ethylene, bis(triethoxysilyl)ethylene, 2-butene-1,4-di(trimethoxysilane), 2-butene-1,4-di(triethoxysilane), and 1,4-di(trimethoxysilylmethoxy)-2-butene; aryloxysilane compounds such as 2-butene-1,4-di(triphenoxysilane); acyloxysilane compounds such as 2-butene-1,4-di(triacetoxysilane); alkylsiloxysilane compounds such as 2-butene-1,4-di[tris(trimethylsiloxy)silane]; aryloxysilane compounds such as 2-butene-1,4-di[tris(triphenylsiloxy)silane]; polysiloxane compounds such as 2-butene-1,4-di(heptamethyltrisiloxane) and 2-butene-1,4-di(undecamethylcyclohexasiloxane); and the like.

The amount of the olefinically unsaturated hydrocarbon compound containing a modified group is not particularly limited, as it acts not only to introduce a modified group at the polymer chain end of the copolymer but also as a molecular weight regulator, and may be appropriately selected according to the molecular weight of the copolymer to be produced, but is usually in the range of a molar ratio of 1/100 to 1/100,000, preferably 1/200 to 1/50,000, more preferably 1/500 to 1/10,000, relative to the monomer used for copolymerization.

The polymerization reaction temperature is not particularly limited, but is preferably -100°C or higher, more preferably -50°C or higher, still more preferably 0°C or higher, and particularly preferably 20°C or higher. The upper limit of the polymerization reaction temperature is not particularly limited, but is preferably less than 120°C, more preferably less than 100°C, still more preferably less than 90°C, and particularly preferably less than 80°C. The polymerization reaction time is not particularly limited, but is preferably from 1 minute to 72 hours, more preferably from 10 minutes to 20 hours.

The copolymer obtained by the polymerization reaction may, if desired, have an antioxidant such as a phenol-based stabilizer, a phosphorus-based stabilizer, or a sulfur-based stabilizer added thereto. The amount of the antioxidant to be added may be appropriately determined depending on its type and the like. Furthermore, if desired, an extender oil may be blended into the copolymer. When the copolymer is obtained as a polymerization solution, a known recovery method may be employed to recover the copolymer from the polymerization solution; for example, after separating the solvent by steam stripping or the like, the solid may be filtered off and further dried to obtain the copolymer in solid form.

The content of the copolymer of cyclopentene and the norbornene compound is preferably 20 parts by mass to 90 parts by mass, more preferably 30 parts by mass to 85 parts by mass, per 100 parts by mass of the rubber component. When the content of the copolymer of cyclopentene and the norbornene compound is in the range of 20 parts by mass to 90 parts by mass per 100 parts by mass of the rubber component, the balance among high fuel efficiency, wear resistance, and processability of the rubber composition is further improved.

### - Butadiene Rubber -

The rubber component includes butadiene rubber (BR). Butadiene rubber has a low glass transition temperature (Tg), and by including butadiene rubber in addition to the above-mentioned copolymer of cyclopentene and the norbornene compound in the rubber component, the high fuel efficiency and wear resistance of the rubber composition can be improved.

The content of the butadiene rubber is preferably in the range of 10 parts by mass to 80 parts by mass, more preferably in the range of 15 parts by mass to 70 parts by mass, per 100 parts by mass of the rubber component. When the content of butadiene rubber is in the range of 10 parts by mass to 80 parts by mass per 100 parts by mass of the rubber component, the balance among high fuel efficiency, wear resistance, and processability of the rubber composition is further improved.

### - Other Rubbers -

The rubber component may further include other rubbers. Examples of such other rubbers include natural rubber (NR), synthetic isoprene rubber (IR), styrene-butadiene rubber (SBR), chloroprene rubber (CR), butyl rubber (IIR), halogenated butyl rubber, ethylene-propylene rubber (EPR, EPDM), fluororubber, silicone rubber, urethane rubber, and the like. The content of these other rubbers is preferably 30 parts by mass or less, more preferably 20 parts by mass or less, and still more preferably 10 parts by mass or less, per 100 parts by mass of the rubber component.

### (Carbon Black)

The rubber composition for a tire of the present embodiment contains carbon black having a cetyltrimethylammonium bromide (CTAB) adsorption specific surface area of not less than 50 m²/g and not more than 125 m²/g. When the CTAB adsorption specific surface area of the carbon black is not more than 125 m²/g, the processability of the rubber composition and the high fuel efficiency of a tire using the rubber composition can be improved. When the CTAB adsorption specific surface area of the carbon black is not less than 50 m²/g, the formation of a reinforcement layer by the entanglement of the polymer chains of the above copolymer is sufficiently enhanced, and the wear resistance of a tire using the rubber composition can be improved. Therefore, when the CTAB adsorption specific surface area of the carbon black is not less than 50 m²/g and not more than 125 m²/g, the processability of the rubber composition and the high fuel efficiency and wear resistance of a tire using the rubber composition can be well balanced. Here, from the viewpoint of wear resistance, the CTAB adsorption specific surface area of the carbon black is preferably not less than 100 m²/g, and from the viewpoint of high fuel efficiency and processability, it is preferably not more than 123 m²/g.

Note that, in the present specification, the CTAB adsorption specific surface area of carbon black is a value measured in accordance with JIS K6217-3, and represents the external surface area excluding micropores of the carbon black, as indicated by the specific surface area when CTAB (cetyltrimethylammonium bromide) is adsorbed onto the carbon black.

The content of the carbon black is preferably in the range of 5 parts by mass to 80 parts by mass per 100 parts by mass of the rubber component. When the content of carbon black is not less than 5 parts by mass per 100 parts by mass of the rubber component, the wear resistance of the rubber composition is further improved, and when it is not more than 80 parts by mass, the high fuel efficiency and processability of the rubber composition are further improved. From the viewpoint of wear resistance, the content of carbon black is more preferably not less than 10 parts by mass, still more preferably not less than 20 parts by mass, per 100 parts by mass of the rubber component, and from the viewpoint of high fuel efficiency and processability, it is more preferably not more than 70 parts by mass, still more preferably not more than 60 parts by mass.

### (Others)

The rubber composition for a tire of the present embodiment, in addition to the above-mentioned rubber component and carbon black having a CTAB adsorption specific surface area of not less than 50 m²/g and not more than 125 m²/g, may further contain, as necessary, various components commonly used in the rubber industry, for example, fillers other than carbon black having a CTAB adsorption specific surface area of not less than 50 m²/g and not more than 125 m²/g (such as carbon black having a CTAB adsorption specific surface area of less than 50 m²/g, carbon black having a CTAB adsorption specific surface area exceeding 125 m²/g, silica, etc.), silane coupling agents, antioxidants, hydrogenated fatty acids, zinc oxide (zinc white), tackifiers, vulcanization accelerators, vulcanizing agents, and the like, as long as the object of the present disclosure is not impaired. Commercially available products can be suitably used as these compounding agents.

Examples of the antioxidant include N-(1,3-dimethylbutyl)-N'-phenyl-p-phenylenediamine (6C), 2,2,4-trimethyl-1,2-dihydroquinoline polymer (TMDQ), and the like. These antioxidants may be used alone or in combination of two or more. The content of the antioxidant is not particularly limited, but is preferably in the range of 0.1 part by mass to 5 parts by mass, more preferably 1 part by mass to 4 parts by mass, per 100 parts by mass of the rubber component.

Examples of the hydrogenated fatty acid include stearic acid and the like. The content of the hydrogenated fatty acid is not particularly limited, but is preferably in the range of 0.1 part by mass to 5 parts by mass, more preferably 1 part by mass to 4 parts by mass, per 100 parts by mass of the rubber component.

The content of zinc oxide (zinc white) is not particularly limited, but is preferably in the range of 0.1 part by mass to 10 parts by mass, more preferably 1 part by mass to 8 parts by mass, per 100 parts by mass of the rubber component.

Examples of the tackifier include rosin-based resins, terpene-based resins, petroleum-based resins, phenol-based resins, coal-based resins, xylene-based resins, and the like, among which petroleum-based resins are preferred. Examples of the petroleum-based resin include C₅-based resins, C₅/C₉-based resins, C₉-based resins, dicyclopentadiene resins, and the like. The content of the tackifier is not particularly limited, but is preferably in the range of 0.1 part by mass to 5 parts by mass, more preferably 0.5 part by mass to 3 parts by mass, per 100 parts by mass of the rubber component.

Examples of the vulcanization accelerator include sulfenamide vulcanization accelerators, guanidine vulcanization accelerators, thiazole vulcanization accelerators, thiuram vulcanization accelerators, dithiocarbamate vulcanization accelerators, and the like. These vulcanization accelerators may be used alone or in combination of two or more. The content of the vulcanization accelerator is not particularly limited, but is preferably in the range of 0.1 part by mass to 5 parts by mass, more preferably in the range of 0.2 part by mass to 4 parts by mass, per 100 parts by mass of the rubber component.

Examples of the vulcanizing agent include sulfur and the like. The content of the vulcanizing agent is preferably in the range of 0.1 part by mass to 6 parts by mass, more preferably in the range of 0.5 part by mass to 3 parts by mass, as sulfur, per 100 parts by mass of the rubber component.

### (Method for Producing Rubber Composition for Tire)

The method for producing the above rubber composition for a tire is not particularly limited, but may be, for example, by compounding the above-mentioned rubber component and carbon black with various components appropriately selected as necessary, followed by kneading, warming, extrusion, and the like. Further, by vulcanizing the obtained rubber composition, a vulcanized rubber can be obtained.

The kneading conditions are not particularly limited, and various conditions such as the input volume of the kneading apparatus, the rotational velocity of the rotor, ram pressure, kneading temperature, kneading time, and the type of kneading apparatus may be appropriately selected according to the purpose. As the kneading apparatus, a Banbury mixer, Intermix, kneader, roll, or the like, which is usually used for kneading rubber compositions, may be used.

The conditions for warming are also not particularly limited, and various conditions such as the warming temperature, warming time, and warming apparatus may be appropriately selected according to the purpose. As the warming apparatus, a warming roll machine or the like, which is usually used for warming rubber compositions, may be used.

The conditions for extrusion are also not particularly limited, and various conditions such as extrusion time, extrusion speed, extrusion apparatus, and extrusion temperature may be appropriately selected according to the purpose. As the extrusion apparatus, an extruder or the like, which is usually used for extruding rubber compositions, may be used. The extrusion temperature may be appropriately determined.

The apparatus, method, and conditions for vulcanization are not particularly limited, and may be appropriately selected according to the purpose. As the apparatus for vulcanization, a molding vulcanizer using a mold or the like, which is usually used for vulcanizing rubber compositions, may be used. As for the vulcanization conditions, the temperature is, for example, about 100°C to 190°C.

### <Tire>

The tire of the present embodiment is characterized by including the above rubber composition for a tire. Since the tire of the present embodiment includes the above rubber composition for a tire, high fuel efficiency, wear resistance, and productivity are well balanced. The tread rubber is an example of a site in the tire to which the rubber composition is applied.

The tire of the present embodiment may be obtained by molding using an unvulcanized rubber composition and then vulcanizing according to the type of tire to be applied, or by molding using a semi-vulcanized rubber that has undergone a preliminary vulcanization step and then further subjecting it to main vulcanization. The tire of the present embodiment is preferably a pneumatic tire, and as the gas to be filled in the pneumatic tire, in addition to ordinary or oxygen partial pressure-adjusted air, an inert gas such as nitrogen, argon, or helium may be used.

### EXAMPLES

The present disclosure will be described in more detail below with reference to examples, but the present disclosure is not limited to the following examples.

### <Synthesis Method of Copolymer 1>

Under a nitrogen atmosphere, 77 parts by mass of cyclopentene, 23 parts by mass of dicyclopentadiene, 300 parts by mass of cyclohexane, and 0.069 parts by mass of 1-hexene were added to a glass reaction vessel equipped with a stirrer. Next, 0.024 parts by mass of ring-opening polymerization catalyst dichloro-(3-phenyl-1H-inden-1-ylidene)bis(tricyclohexylphosphine)ruthenium(II) dissolved in 1 part by mass of toluene was added, and the polymerization reaction was carried out at 40°C for 2 hours. After the polymerization reaction, the polymerization was stopped by adding an excess of vinyl ethyl ether. The polymerization solution was poured into a large excess of methanol containing 2,6-di-t-butyl-p-cresol (BHT), the precipitated polymer was recovered, washed with methanol, and then vacuum-dried at 50°C for 24 hours to obtain 60 parts by mass of copolymer 1.

### <Synthesis Method of Copolymer 2>

Under a nitrogen atmosphere, 78 parts by mass of cyclopentene, 22 parts by mass of dicyclopentadiene, 360 parts by mass of cyclohexane, and 0.041 parts by mass of 1-hexene were added to a glass reaction vessel equipped with a stirrer. Next, 0.024 parts by mass of ring-opening polymerization catalyst dichloro-(3-phenyl-1H-inden-1-ylidene)bis(tricyclohexylphosphine)ruthenium(II) dissolved in 1 part by mass of toluene was added, and the polymerization reaction was carried out at 40°C for 2 hours. After the polymerization reaction, the polymerization was stopped by adding an excess of vinyl ethyl ether. The polymerization solution was poured into a large excess of methanol containing 2,6-di-t-butyl-p-cresol (BHT), the precipitated polymer was recovered, washed with methanol, and then vacuum-dried at 50°C for 24 hours to obtain 56 parts by mass of copolymer 2.

### <Analysis of Copolymers>

The molecular weight of each synthesized copolymer and the proportion of structural units derived from each monomer were measured by the following methods. The results are presented in Table 1.

### (1) Molecular Weight

The measurement was conducted using a gel permeation chromatography (GPC) system "HLC-8220" (manufactured by Tosoh Corporation), employing two H-type columns "HZ-M" (manufactured by Tosoh Corporation) connected in series, with tetrahydrofuran as the solvent, and at a column temperature of 40°C. As the detector, a differential refractometer "RI-8320" (manufactured by Tosoh Corporation) was used. The weight-average molecular weight (Mw) of the copolymer was measured as a polystyrene-equivalent value.

### (2) Proportion of Structural Units Derived from Each Monomer

The proportion of structural units derived from each monomer constituting the copolymer was determined from ¹H-NMR spectral measurement.

**[Table 1]**

| | | Copolymer 1 | Copolymer 2 |
|---|---|---|---|
| Weight-average molecular weight (Mw) | ×10³ | 258 | 352 |
| Structural units derived from cyclopentene | Mass % | 59.1 | 58.1 |
| Structural units derived from dicyclopentadiene | Mass % | 40.9 | 41.9 |

### <Preparation of Rubber Composition>

Each component was blended and kneaded according to the formulation presented in Table 2 to prepare the rubber compositions of the examples and comparative examples.

It should be noted that, in addition to the components listed in Table 2, each rubber composition further contained, per 100 parts by mass of the rubber component, 2 parts by mass of hydrogenated fatty acid, 3.5 parts by mass of zinc white, 2.5 parts by mass (total of two types) of antioxidant, 1 part by mass of resin, 1.4 parts by mass of sulfenamide vulcanization accelerator, and 1.05 parts by mass of sulfur.

### <Evaluation of Rubber Composition>

The obtained rubber compositions were evaluated for high fuel efficiency, wear resistance, and processability by the following methods. The results are presented in Table 2.

### (3) High Fuel Efficiency

The loss tangent (tan δ) of test pieces produced from the obtained rubber compositions was measured using a viscoelasticity meter (TA Instruments) under conditions of 50°C, 10% strain, and 15 Hz frequency. In addition, the modulus (M50) [MPa] at 50% strain of test pieces produced from the obtained rubber compositions was measured at room temperature. The evaluation results were indexed by setting the tan δ/M50 of Comparative Example 1 (Comp. Example 1) to 100. The smaller the index value, the smaller the tanδ, indicating superior high fuel efficiency.

### (4) Wear Resistance

In accordance with JIS K 6264-2:2005, the amount of wear at room temperature was measured using a Lambourn abrasion tester (manufactured by Ueshima Seisakusho Co., Ltd.), with sandpaper affixed to the abrasive wheel and a slip rate of 8.5%. The evaluation results were indexed by setting the reciprocal of the wear amount of Comparative Example 1 (Comp. Example 1) to 100. The larger the index value, the smaller the amount of wear, indicating superior wear resistance, and an index of 103 or higher is considered favorable.

### (5) Processability

The dynamic storage (shear) modulus G' was measured using an unvulcanized viscoelasticity meter "RPA2000" (manufactured by ALPHA TECHNOLOGIES) under conditions of 130°C, 1° strain (twist angle), and 100 cpm frequency. The evaluation results were indexed by setting the value of Comparative Example 1 (Comp. Example 1) to 100. The smaller the index value, the lower the unvulcanized rubber viscosity, indicating better processability, and a processability index of 145 or less is considered favorable.

**[Table 2]**

| | | | | Example 1 | Example 2 | Example 3 | Comp. Example 1 | Comp. Example 2 | Comp. Example 3 | Comp. Example 4 | Comp. Example 5 |
|---|---|---|---|---|---|---|---|---|---|---|---|
| Formulation | Rubber component | NR *1 | Parts by mass | - | - | - | 60 | 40 | - | - | - |
| | | BR *2 | | 40 | 40 | 40 | 40 | 60 | 40 | 40 | - |
| | | Copolymer 1 *3 | | - | - | 60 | - | - | - | 60 | 100 |
| | | Copolymer 2 *4 | | 60 | 60 | - | - | - | 60 | - | - |
| | Carbon black 1 *5 | | | 50 | - | - | - | - | - | - | 50 |
| | Carbon black 2 *6 | | | - | 50 | 50 | - | - | - | - | - |
| | Carbon black 3 *7 | | | - | - | - | 50 | 50 | 50 | - | - |
| | Carbon black 4 *8 | | | - | - | - | - | - | - | 50 | - |
| Evaluation results | High fuel efficiency | | Index | 80 | 86 | 79 | 100 | 101 | 74 | 43 | 80 |
| | Wear resistance | | Index | 133 | 106 | 115 | 100 | 76 | 90 | 48 | 44 |
| | Processability | | Index | 127 | 116 | 144 | 100 | 97 | 147 | 100 | 143 |

| | | | | | | | | | | | |
|---|---|---|---|---|---|---|---|---|---|---|---|
| *1 NR: natural rubber *2 BR: butadiene rubber, UBE Elastomer, trade name "BR150L" *3 Copolymer 1: copolymer of cyclopentene and norbornene compound synthesized by the above method *4 Copolymer 2: copolymer of cyclopentene and norbornene compound synthesized by the above method *5 Carbon black 1: N234, manufactured by Tokai Carbon Co., Ltd., trade name "SEAST 7HM", CTAB adsorption specific surface area = 119 m²/g *6 Carbon black 2: N220, manufactured by Tokai Carbon Co., Ltd., trade name "SEAST 6", CTAB adsorption specific surface area = 111 m²/g *7 Carbon black 3: CTAB adsorption specific surface area = 130 m²/g *8 Carbon black 4: N550, manufactured by Asahi Carbon Co., Ltd., trade name "#65", CTAB adsorption specific surface area = 42 m²/g | | | | | | | | | | | |

From the results presented in Table 2, it can be seen that the rubber compositions of the examples, which contain a copolymer of cyclopentene and a norbornene compound, butadiene rubber, and carbon black having a CTAB adsorption specific surface area of not less than 50 m²/g and not more than 125 m²/g, achieve a good balance among high fuel efficiency, wear resistance, and processability.

On the other hand, it can be seen that the rubber composition of Comparative Example 4, which contains a copolymer of cyclopentene and a norbornene compound and butadiene rubber, but in which the CTAB adsorption specific surface area of the contained carbon black is less than 50 m²/g, exhibits significantly deteriorated wear resistance. In addition, it can be seen that the rubber composition of Comparative Example 5, which contains a copolymer of cyclopentene and a norbornene compound and carbon black having a CTAB adsorption specific surface area of not less than 50 m²/g and not more than 125 m²/g, but does not contain butadiene rubber, also exhibits significantly deteriorated wear resistance.

## Claims

1. A rubber composition for a tire comprising a rubber component and carbon black having a cetyltrimethylammonium bromide (CTAB) adsorption specific surface area of not less than 50 m²/g and not more than 125 m²/g, wherein
the rubber component includes:
a copolymer of cyclopentene and a norbornene compound represented by general formula (1), shown below: 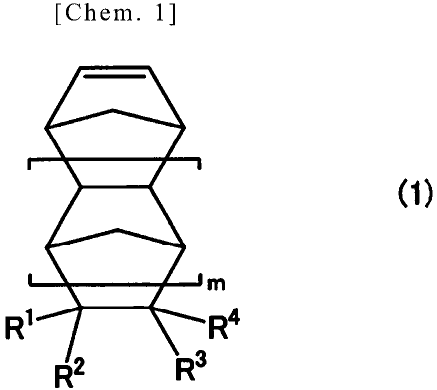 where, in general formula (1), R¹ to R⁴ each independently represent a hydrogen atom, a hydrocarbon group having 1 to 20 carbon atoms, or a substituent containing a halogen atom, a silicon atom, an oxygen atom, or a nitrogen atom, R² and R³ may be bonded to each other to form a ring, and m is an integer of 0 to 2; and
butadiene rubber.

2. The rubber composition for a tire according to claim 1, wherein the norbornene compound represented by general formula (1) is 2-norbornene and/or dicyclopentadiene.

3. The rubber composition for a tire according to claim 1, wherein content of the copolymer of cyclopentene and the norbornene compound is 20 parts by mass to 90 parts by mass per 100 parts by mass of the rubber component.

4. The rubber composition for a tire according to claim 1, wherein the copolymer of cyclopentene and the norbornene compound has a weight-average molecular weight (Mw) of 200,000 to 1,000,000.

5. The rubber composition for a tire according to claim 1, wherein the copolymer of cyclopentene and the norbornene compound has a content ratio of structural units derived from cyclopentene of 20% by mass to 75% by mass.

6. The rubber composition for a tire according to claim 2, wherein the copolymer of cyclopentene and the norbornene compound has a content ratio of structural units derived from 2-norbornene of 10% by mass to 60% by mass.

7. The rubber composition for a tire according to claim 2, wherein the copolymer of cyclopentene and the norbornene compound has a content ratio of structural units derived from dicyclopentadiene of 10% by mass to 60% by mass.

8. The rubber composition for a tire according to claim 1, wherein content of the carbon black is 5 parts by mass to 80 parts by mass per 100 parts by mass of the rubber component.

9. A tire comprising the rubber composition for a tire according to claim 1.
